# EUROPÄISCHE PATENTSCHRIFT

(11) **EP 0 608 746 B1**
(45) Veröffentlichungstag und Bekanntmachung des Hinweises auf die Patenterteilung: **02.04.1997**
(21) Anmeldenummer: 94100619.9
(22) Anmeldetag: 18.01.1994
(51) Int. Cl.: B27C 9/02, B23Q 1/25, B23Q 1/26

(54) **CNC-gesteuerte Holzbearbeitungsanlage, insbesondere für lange Werkstücke wie Balken**
Numerically controlled wood-working machine in particular for long workpieces such as beams
Machine de travail du bois à contrôle numérique, en particulier pour des produits longs comme des poutres

(30) Priorität: 19.01.1993 DE 4301217
(43) Veröffentlichungstag der Anmeldung: 03.08.1994
(73) Patentinhaber: BALJER & ZEMBROD GmbH & Co., D-88361 Altshausen (DE)
(72) Erfinder: Geissler, Erwin, D-88273 Fronreute (DE); Müller, Christof, D-88326 Aulendorf (DE); Schuler, Reinhold, D-88361 Boms (DE); Würstle, Willi, D-88213 Ravensburg (DE)
(74) Vertreter: Patentanwälte Eisele, Otten & Roth

(56) Entgegenhaltungen:
- EP-A- 0 245 177
- EP-A- 0 267 156
- EP-A- 0 319 032
- EP-A- 0 348 536
- FR-A- 2 612 826
- US-A- 5 017 063

## Beschreibung

Die Erfindung betrifft eine CNC-gesteuerte Holzbearbeitungsanlage, insbesondere für lange Werkstücke wie Balken, entsprechend dem Gattungsbegriff des Anspruchs 1.

Eine Anlage dieser Art ist aus der europäischen Patentanmeldung 0 267 156 bekannt. Es ist ein säulenartiger Ständer vorgesehen, an dem ein horizontaler Ausleger vertikal und horizontal verschiebbar gelagert ist. Der Ausleger trägt mittels eines Zwischenstücks einen Spindelmotor, in dessen rotierender Spindel das betreffende Bearbeitungswerkzeug aufgenommen ist. Das Werkstück ist auf einer Führungsvorrichtung aufgespannt, die an einer Wand montiert ist und die das Werkstück im Bewegungsbereich des Werkzeugs senkrecht zum Ausleger an dem Ständer vorbei bewegt. Sowohl die Führungsbewegungen des Werkstücks als auch die Werkzeugbewegungen sind CNC-gesteuert, so daß auch komplizierte Bearbeitungsvorgänge nach Programm selbsttätig ablaufen können.

Die Stabilität des Bewegungssystems für das Werkzeug, insbesondere des Säulenständers und des verhältnismäßig langen Auslegers, läßt jedoch zu wünschen übrig. Bei hohen Vorschubgeschwindigkeiten oder einem harten Werkstoff kann dies zu einem Flattern des Werkzeugs oder zu untragbar großen Abweichungen vom Sollmaß führen.

Aus US-A-5 017 063 ist es bei einer Universalfräsmaschine bekannt, an einem Portalgehäuse einen in horizontaler Richtung beweglichen Schlitten und an diesem einen in vertikaler Richtung beweglichen Schlitten anzuordnen. An dem Vertikalschlitten ist ein durch Lösen von Klemmschrauben um eine vertikale Achse einstellbares Zwischenstück und an diesem ein um eine horizontale Achse einstellbarer Spindelhalter gelagert, wobei die Ebene der Spindelachse von der vertikalen Winkelachse einen Abstand hat.

Diese Schlittenanordnung hat zwar eine höhere Stabilität der Werkzeugspindelführung zur Folge, jedoch verbleibt ein Kragarm infolge des erwähnten Achsebenen-Abstandes. Außerdem hat dieser den Nachteil, daß das Koordinatensystem sich in Abhängigkeit von der Einstellung der Winkelachse verschiebt. Dadurch sind Ausgleichsbewegungen erforderlich, welche die Bearbeitungsgenauigkeit verringern und den Aufwand für die elektronische Steueranordnung beträchtlich erhöhen.

Um dieses Problem zu lösen, wird erfingungsgemäß eine Holzbearbeitungsanlage mit den Merkmalen des Anspruchs 1 vorgeschlagen. Danach wird die Führungsvorrichtung am Boden abgstützt und so angeordnet, daß sie das Portal senkrecht durchsetzt. Diese Portalbauweise in Verbindung mit einer solchen Anordnung des Spindelmotors, daß sich die beiden Winkelachsen und die Spindelachse in einem Punkte schneiden, garantiert einerseits eine hohe Stabilität der Werkzeugführung und vereinfacht andererseites die Steueranordnung.

Zweckmäßigerweise hat jeder der beiden Schlitten zwei parallele Führungen.

Mit dem beschriebenen Werkzeugführungssystem läßt sich ein Holzbalken ohne weiteres oben und an den Seiten bearbeiten. Eine Bearbeitung auch an der Unterseite stößt auf Schwierigkeiten, sofern der Balken nicht ausgespannt und gewendet werden soll. Um hier Abhilfe zu schaffen und den Anwendungsbereich der Anlage auf Programme mit allseitiger Bearbeitung auszudehnen, wird vorgeschlagen, daß die Werkstücke an den Spannwagen in Spannvorrichtungen aufgenommen sind, die gemeinsam mit dem aufgespannten Werkstück um eine sich in der Richtung X erstreckende Achse schwenkbar sind, und zwar insbesondere um 90°.

Es ist an sich bekannt, bei solchen Anlagen selbsttätige Werkzeugwechselvorrichtungen vorzusehen, bei denen die einzelnen Bearbeitungswerkzeuge in Halterechen eines Werkzeugmagazins untergebracht sind, wo die Spindel sie abholt und wieder zurückbringt. In Weiterbildung der Erfindung wird hierzu vorgeschlagen, daß das Werkzeugmagazin an einem vor dem Portalgehäuse angeordneten Gerüst über der Führungsvorrichtung und in der Richtung X verschiebbar angebracht ist.

Ein Ausführungsbeispiel der Erfindung wird nachfolgend anhand der Zeichnung erläutert. Im einzelnen zeigt
- Fig. 1: eine räumliche Gesamtdarstellung einer CNC-gesteuerten Holzbearbeitungsanlage,
- Fig. 2: eine Seitenansicht des Portalgerüsts mit dem Schlitten, dem Zwischenstück, dem Spindelmotor und dem Werkzeugmagazin-Tragmast,
- Fig. 3: die Draufsicht der Anordnung nach Fig. 2,
- Fig. 4: eine Ansicht des Portalgerüsts und der Führungsvorrichtung in der Richtung X gesehen,
- Fig. 5: eine Ansicht des Werkzeugmagazin-Tragmastes ebenfalls in der Richtung X gesehen,
- Fig. 6: eine Seitenansicht der drehbeweglichen Aufhängung des Spindelmotors in größerem Maßstab und
- Fig. 7: eine Seitenansicht entsprechend der Fig. 6, wobei jedoch das Zwischenstück und der Spindelmotor um jeweils 90° gedreht sind.

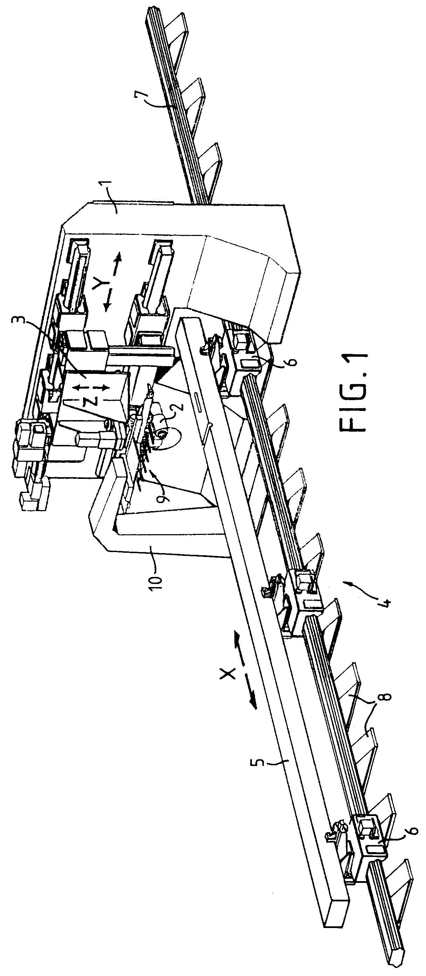

Fig. 1 gibt einen Überblick über die Teile der Anlage, die auf einer ebenen Fläche frei aufgestellt werden können. In einem Portalgehäuse 1 sind außer der Werkstück-Führungsvorrichtung und dem Werkzeug-Wechselmagazin alle funktionellen und steuernden Einheiten untergebracht. Das zentrale Funktionselement ist eine Haupt- oder Werkzeugspindel. Sie besteht aus einem leistungsstarken und stufenlos in beiden Drehrichtungen regelbaren Spindelmotor 2, der um zwei Drehachsen einstellbar an einem Kreuzschlitten 3 angebracht ist, der in horizontaler und vertikaler Richtung an dem Portal verfahren werden kann. Außer den tragenden Elementen nimmt das Portalgehäuse auch den größten Teil der erforderlichen elektrischen und antriebstechnischen, d. h. hydraulischen und pneumatischen Aggregate und Komponenten auf.

Das Portal wird senkrecht durchsetzt von einer langgestreckten Führungsvorrichtung 4, welche die Richtung X - Linearachse des Werkstücks - definiert. Ihre Länge, beispielsweise mindestens 20 m, bestimmt sich durch die Maximallänge der zu bearbeitenden Werkstücke. Im Beispiel ist es ein Holzbalken 5, der auf drei Spannwagen 6 aufgespannt ist. Die Spannwagen werden gemeinsam mit dem aufgespannten Balken in genauer Zuordnung zu den Werkzeugbewegungen an einer geradlinigen Führungsbahn 7 bewegt, die aus Schienen zusammengesetzt und auf Stützböcken 8 in einem Abstand vom Boden befestigt ist.

Ein Werkzeugmagazin 9 mit einem Halterechen, aus dem der Spindel wahlweise das erforderliche Werkzeug zugeführt wird, ist an einem galgenartigen Tragmast 10 über der Führungsvorrichtung und vor dem Portal angebracht.

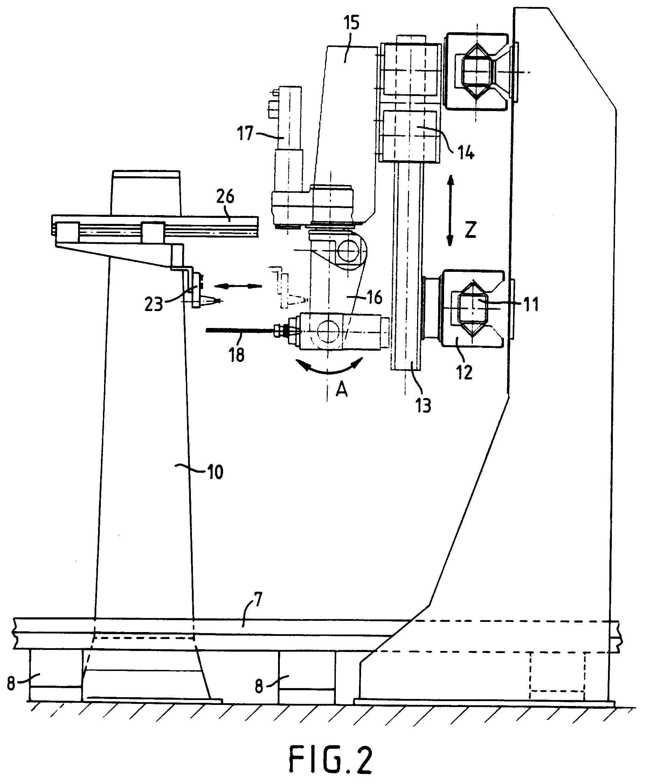

Die Figuren 2 bis 4 zeigen u. a. den Kreuzschlitten deutlicher. Die Linearachse Y besteht aus zwei parallel übereinander angeordneten Führungen 11, an denen ein Horizontalschlitten 12 läuft. Der Horizontalschlitten trägt zwei parallele vertikale Führungen 13, die einen Vertikalschlitten 14 tragen. Die vertikale Richtung entspricht der Linearachse Z. Mit Hilfe dieser beiden Achsen läßt sich das Werkzeug im Bearbeitungsbereich an jeden Punkt der zur Linearachse X senkrechten Vertikalebene bringen.

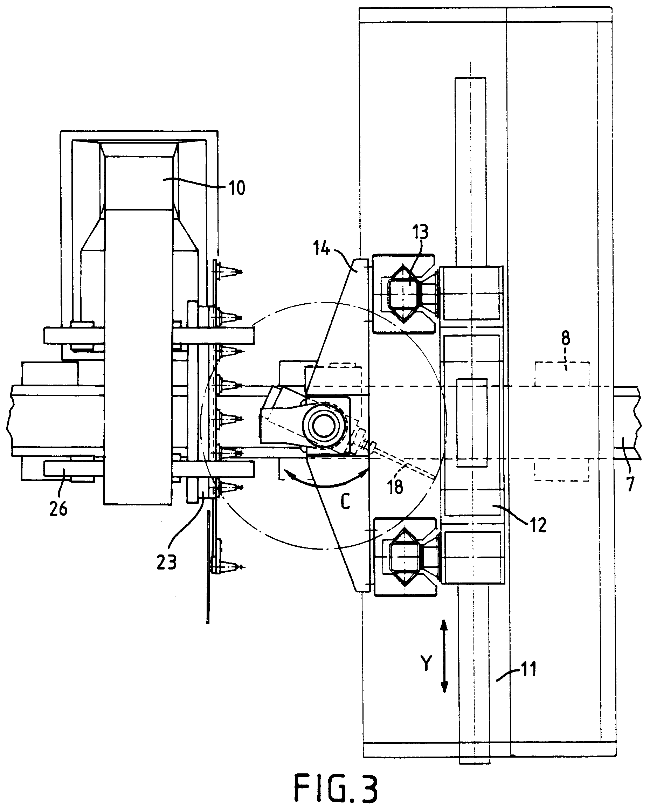

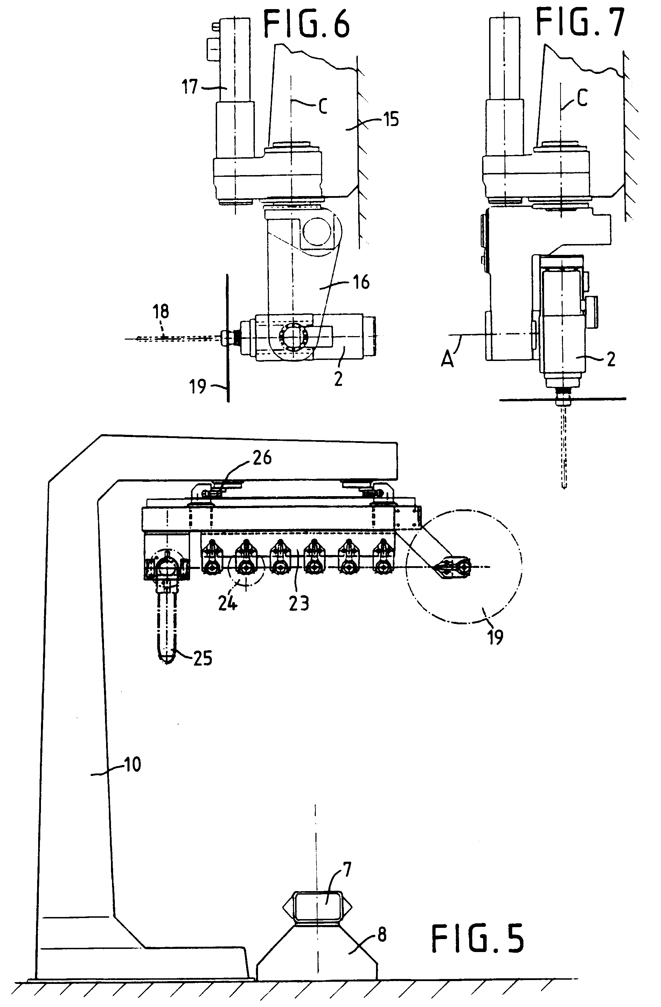

An dem Vertikalschlitten 14 ist ein Vorsatz 15 angebracht, der als Lager für ein winkelförmiges Zwischenstück 16 dient. Diese Anordnung ist am besten aus den Figuren 6 und 7 erkennbar. Die Lagerachse des Zwischenstücks 16 ist die Winkelachse C. Sie verläuft senkrecht zu dem einen Schenkel des Zwischenstücks 16, während der andere Schenkel außermittig zu der Achse nach unten steht. An dem Vorsatz ist auch noch der Drehantrieb 17 für die Achse C angebracht. Schließlich ist an den nach unten stehenden Schenkel des Zwischenstücks 16 der Spindelmotor 2 um eine horizontale Winkelachse A drehbar gelagert. Die Figuren 2 und 6 zeigen den Spindelmotor in einer Stellung, in welcher die Spindelachse in Richtung der Linearachse X steht. Die Winkelachse A verläuft dabei in Querrichtung. Gemäß Fig. 3 ist der Spindelmotor 2 um die Winkelachse C gedreht, so daß die Spindelachse schrägt steht. Fig. 7 zeigt den Spindelmotor 2 in einer Stellung, in welcher die Spindelachse nach unten zeigt und mit der Winkelachse C fluchtet. Die Winkelachse A steht nach dieser Figur in Richtung der Linearachse X.

Wichtige Bearbeitungswerkzeuge sind unter anderen ein langer Bohrer 18 und ein Kreissägeblatt 19, die in den Zeichnungen teils ausgezogen, teils gestrichelt angedeutet sind. Durch die beschriebene Konstellation der fünf Verstellachsen ist eine große Vielfalt an Bewegungsmöglichkeiten gegeben. Da sich die einzelnen Achsen nicht nur voneinander unabhängig, sondern auch kombiniert betreiben lassen, können extrem schräge, runde und unregelmäßig gekrümmte Konturen realisiert werden.

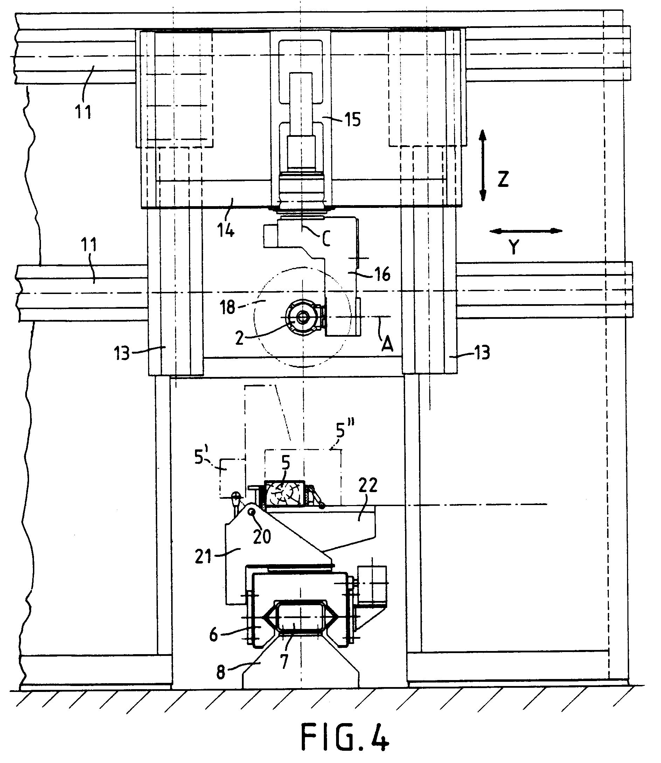

Zur Führungsvorrichtung 4 ist noch nachzutragen, daß der aufgespannte Balken 5 im eingespannten Zustand um eine in Richtung X verlaufende Achse 20 geschwenkt werden kann. Hierzu wird auf Fig. 4 Bezug genommen. Auf den dort dargestellten Spannwagen 6 ist eine Spannanordnung aufgebaut, die aus einem Basisgestell 21 und einem Schwenkarm 22 besteht. Auf diesem ist der Balken fest aufgespannt. Da die Schwenkachsen 20 fluchten, können die Schwenkarme 22 aller drei Spannwagen aus der horizontalen Stellung um 90° schwenken, wodurch der Balken in die strichpunktiert angedeutete Stellung 5' gelangt. Dadurch ist auch seine Unterseite zur Bearbeitung zugänglich. Die Querschnittsobergrenze für das Werkstück ist im Beispiel durch eine strichpunktierte Linie 5'' angedeutet.

Die Werkzeugwechselvorrichtung ist am besten in den Figuren 2, 3 und 5 dargestellt. Sie weist einen Halterechen 23 auf, an welchem im Beispiel acht verschiedene Werkzeuge in Klemmhalterungen getragen sind, darunter verschiedene Bohrer und Fingerfräser, einen Fräskopf 24, eine Kettensäge 25 und das schon erwähnte Kreissägeblatt 19. Der ganze Halterechen 23 ist an dem Ausleger des Tragmastes 10 in Richtung X verschiebbar gelagert. Dazu dienen unter anderem zwei Führungsschienen 26. Der Antrieb ist nicht dargestellt. Aus diesem Magazin entnimmt die Spindel das für die jeweils anstehende Bearbeitung erforderliche Werkzeug. Während des Betriebs der Spindel sind die verunreinigungsempfindlichen Aufnahmekegel der Werkzeuge durch eine Abdeckklappe geschützt, die sich erst unmittelbar vor dem Werkzeugwechsel öffnet. In der Zeichnung, insbesondere Fig. 5, ist die Abdeckklappe nicht dargestellt.

Der Spindelmotor umfaßt einen Drehzahlbereich von 0 bis 18 000 Umdrehungen pro Minute und ist dazu in der Lage, ein Werkzeug innerhalb von wenigen Sekunden von seiner Arbeitsdrehzahl bis zum Stillstand zu verzögern bzw. es in der gleichen Zeit wieder auf seine Arbeitsdrehzahl zu beschleunigen. Die Vorrichtung zur Aufnahme der Werkzeuge entspricht den dafür geschaffenen Normen, z. B. SK 40.

Das Holzbearbeitungszentrum wird von einer CNC-Steuerung gesteuert, in welche eine speicherprogrammierbare Steuerung integriert ist. Zur Dateneingabe dient ein kombiniertes Bedienpanel, das neben einem vollgraphischen Colorbildschirm auch verschiedene Steuerelemente wie Not-Aus-Schalter usw. sowie eine wasser- und staubdichte Kurzhubtastatur enthält. Diese Steuerung bietet die Möglichkeit, Werkstücke in jeder Raumebene und in jeder beliebigen Kontur herzustellen. Neben den zur Steuerung der Holzbearbeitungsanlage notwendigen Funktionen beinhaltet die CNC ein Einzelstabprogramm, mit dessen Hilfe sich alle Bauteile eines oder mehrerer Bauvorhaben programmieren und verwalten lassen.
- 1: Portalgehäuse
- 2: Spindelmotor
- 3: Kreuzschlitten
- 4: Führungsvorrichtung
- 5: Holzbalken
- 5': Schwenkstellung
- 5'': Maximalquerschnitt
- 6: Spannwagen
- 7: Führungsbahn
- 8: Stützbock
- 9: Werkzeugmagazin
- 10: Tragmast
- 11: Führung
- 12: Horizontalschlitten
- 13: Führung
- 14: Vertikalschlitten
- 15: Vorsatz
- 16: Zwischenstück
- 17: Drehantrieb
- 18: Bohrer
- 19: Kreissägeblatt
- 20: Schwenkachse
- 21: Basisgestell
- 22: Schwenkarm
- 23: Halterechen
- 24: Fräskopf
- 25: Kettensäge
- 26: Führungsschienen
- X: Linearachse
- Y: Linearachse
- Z: Linearachse
- A: Winkelachse
- C: Winkelachse

## Patentansprüche

1. CNC-gesteuerte Holzbearbeitungsanlage, insbesondere für lange Werkstücke wie Balken, mit einer Vorrichtung zur Führung der Werkstücke mit Hilfe von Spannwagen während der Bearbeitung in einer horizontalen Richtung X, mit einer von einem Spindelmotor angetriebenen Werkzeugspindel, die in einer zur Richtung X senkrechten Ebene bewegbar und um mehrere Achsen drehbar ist, dadurch gekennzeichnet, daß an einem von der Führungsvorrichtung (4) senkrecht durchsetzten Portalgehäuse (1) ein in horizontaler Richtung (Y) beweglicher Schlitten (12) und an diesem ein in vertikaler Richtung (Z) beweglicher Schlitten (14) angeordnet ist, daß an dem Vertikalschlitten ein um eine vertikale Achse (C) drehbares Zwischenstück (16) und an diesem ein um eine horizontale Achse (A) drehbarer Spindelmotor (2) gelagert ist, daß die vertikale Achse (C) dem Vertikalschlitten (14) mittig vorgesetzt ist, daß das Zwischenstück (16) eine Winkelform hat und mit seinem horizontalen Schenkel gelagert ist und daß der Spindelmotor (2) an der Innenseite des vertikalen Schenkels des Zwischenstücks (16) derart gelagert ist, daß die beiden Winkelachsen (C) und (A) und die Spindelachse sich in einem Punkt schneiden.

2. Holzbearbeitungsanlage nach Anspruch 1, dadurch gekennzeichnet, daß jeder Schlitten zwei parallele Führungen (11, 13) aufweist.

3. Holzbearbeitungsanlage nach Anspruch 1, dadurch gekennzeichnet, daß die Werkstücke (5) an den Spannwagen (6) in Spannvorrichtungen (22) aufgenommen sind, die gemeinsam mit dem aufgespannten Werkstück um eine sich in der Richtung X erstreckende Achse (20) schwenkbar sind.

4. Holzbearbeitungsanlage nach Anspruch 1, dadurch gekennzeichnet, daß eine selbsttätige Werkzeugwechselvorrichtung vorgesehen ist, deren Werkzeugmagazin (23) an einem vor dem Portalgehäuse (1) angeordneten Gerüst (10) über der Führungsvorrichtung (4) in der Richtung X verschiebbar angebracht ist.

## Claims

1. Numerically controlled woodworking machine, in particular for long workpieces such as beams with a device for guiding the workpieces with the aid of loading cars during working in a horizontal direction X with a tool spindle driven by a spindle motor which is movable in a plane perpendicular to the direction X and rotatable about several axes, characterised in that on a portal housing (1) penetrated vertically by the guiding device (4) a slide (12) movable in horizontal direction (Y) and a slide (14) movable in vertical direction (Z) is arranged, in that on the vertical slide a connecting piece (16) rotatable about a vertical axis (C) is mounted and on the connecting piece a spindle motor (2) is mounted rotatable about a horizontal axis (A), in that the vertical axis (C) is in front of the vertical slide (14), in that the connecting piece (16) has an angular shape and is mounted with its horizontal arm and in that the spindle motor (2) is mounted on the inside of the vertical arm of the connecting piece (16) so that the two angular axes (C) and (A) and the spindle axis cross at one point.

2. Woodworking machine according to claim 1, characterised in that each slide has two parallel guides (11, 13).

3. Woodworking machine according to claim 1, characterised in that the workpieces (5) are mounted on the loading cars (6) in clamping devices (22) which are pivotable together with the loaded workpiece about an axis (20) extending in the direction X.

4. Woodworking machine according to claim 1, characterised in that an automatic tool changing device is provided the tool magazine of which (23) is attached onto a frame (1) arranged in front of the portal housing (1) displaceable over the guiding device (4) in direction X.

## Revendications

1. Installation de travail du bois à commande numérique par calculateur, en particulier pour des pièces longues comme des poutres, comportant un dispositif pour guider les pièces à l'aide de chariots de serrage pendant le traitement dans une direction horizontale X, un arbre d'outil entraîné par un moteur à arbre, qui est déplaçable dans un plan perpendiculaire à la direction X et est rotatif autour de plusieurs axes,
caractérisée en ce que, sur un portique (1) traversé orthogonalement par le dispositif de guidage (4), il est agencé un chariot (12) mobile en direction horizontale (Y) et, sur celui-ci, un chariot (14) mobile en direction verticale (Z), en ce que, sur le chariot vertical, il est monté une pièce intermédiaire (16) pouvant tourner autour d'un axe vertical (C) et, sur celle-ci, un moteur à arbre (2) pouvant tourner autour d'un axe horizontal (A), en ce que l'axe vertical (C) est disposé, de façon centrale, devant le chariot vertical (14), en ce que la pièce intermédiaire (16) présente une forme angulaire et est montée par sa branche horizontale, et en ce que le moteur à arbre (2) est monté sur la face interne de la branche verticale de la pièce intermédiaire (16) de sorte que les deux axes angulaires (C) et (A) et l'axe de l'arbre se coupent en un point.

2. Installation de travail du bois selon la revendication 1, caractérisée en ce que chaque chariot présente deux guides parallèles (11,13).

3. Installation de travail du bois selon la revendication 1, caractérisée en ce que les pièces (5) sont reçues sur les chariots de serrage (6) dans des dispositifs de serrage (22) qui peuvent pivoter, en même temps que la pièce serrée, autour d'un axe (20) s'étendant dans la direction X.

4. Installation de travail du bois selon la revendication 1, caractérisée en ce qu'un dispositif de changement d'outil automatique est prévu, dont le magasin d'outil (23) est agencé de façon déplaçable dans la direction X sur un cadre (10) agencé devant le portique (1) par l'intermédiaire du dispositif de guidage (4).
